# EUROPEAN PATENT APPLICATION

(11) **EP 4 546 805 A1**
(43) Date of publication of application: **30.04.2025**
(21) Application number: 23827044.1
(22) Date of filing: 13.06.2023
(51) Int. Cl.: H04N 21/835, G06F 21/64, H04L 9/32, H04N 21/235

(54) **CONTENT GENERATION DEVICE AND CONTENT MANAGEMENT DEVICE WHICH REGISTER INFORMATION IN BLOCKCHAIN USING AUDIO DATA IN VIDEO FILE, AND CONTROL METHOD AND PROGRAM FOR SAME**

(30) Priority: 22.06.2022 JP 2022100340
(71) Applicant: CANON KABUSHIKI KAISHA, Tokyo 146-8501 (JP)
(72) Inventor: TANAKA Keisuke, Tokyo 146-8501 (JP); TSUCHIDA Naohiko, Tokyo 146-8501 (JP); UENO Daiyu, Tokyo 146-8501 (JP); SAKAIDA Minoru, Tokyo 146-8501 (JP); FUJITA Atsushi, Tokyo 146-8501 (JP); KUBO Keiichiro, Tokyo 146-8501 (JP)
(74) Representative: TBK
(86) International application number: PCT/JP2023/021832
(87) International publication number: WO 2023/248858

(57) **Abstract**

Provided is a content generation apparatus capable of reducing a processing load of generating a hash value to be registered in a blockchain in a configuration using audio data in video files.

An image pickup apparatus 102 generates a video file including video data, audio data, and metadata, and generates a hash value from the audio data and the metadata. The image pickup apparatus 102 transmits the video file and the hash value to a management system 101 that registers the hash value and the metadata in a blockchain.

## Description

### Technical Field

The present invention relates to a content generation apparatus and a content management apparatus for registering information in a blockchain using audio data in a video file, and a control method and a program therefor.

### Background Art

In recent years, information dissemination via video distribution websites or audio media has become active, and a time has come in which anyone can browse and transmit information. Under such circumstances, processing technology for video files has further evolved, making it more difficult for viewers of information to determine authenticity of the information. This makes problems such as fake news and fraud cases more serious. To address these problems, there is a growing demand for a mechanism for guaranteeing the authenticity of video files (that is, guaranteeing that no processing or falsification has been added to the video files).

As a mechanism for guaranteeing the authenticity of video files, it is considered to use blockchain technology which is widely used in finance and other industries. With blockchain technology, falsification of digital data can be prevented in a decentralized manner and at low cost. For example, a management system using blockchain technology registers, in a blockchain, a hash value of content along with metadata accompanying the content, to guarantee the authenticity of the content from the time of its generation (for example, refer to Patent Literature 1). This technology makes it possible to acquire, from the management system, content that has not been processed or otherwise tampered with since its generation, and to publish the acquired content on the Internet, the SNS, or the like.

### Citation List

### Patent Literature

Patent Literature 1: Japanese Laid-Open Patent Publication (kokai) No. 2017-204706

### Summary of Invention

### Technical Problem

In recent years, not video files themselves for which various types of information are registered in a blockchain but audio data in video files are increasingly used. On the other hand, video files have a larger data volume than other content such as still image files, and generation of a hash value of a video file has a larger processing load than generation of a hash value of other content. Therefore, in the above-described use form, a mechanism capable of reducing the processing load of generating a hash value to be registered in a blockchain is demanded.

The present invention provides a content generation apparatus and a content management apparatus capable of reducing the processing load of generating a hash value to be registered in a blockchain in a configuration using audio data in video files, and a control method and a program therefor.

### Solution to Problem

In order to solve the above-described problems, a content generation apparatus according to the present invention includes: means for generating a video file including video data, audio data, and metadata; means for generating a hash value from the audio data and the metadata; and transmission means for transmitting the hash value and the video file to a content management apparatus that registers the hash value and the metadata in a block of a blockchain.

### Advantageous Effects of Invention

According to the present invention, in the configuration using audio data in video files, it is possible to reduce the processing load of generating a hash value to be registered in a blockchain.

### Brief Description of Drawings

FIG. 1 is a diagram for explaining a function of a management system as a content management apparatus that communicates with an image pickup apparatus as a content generation apparatus according to the present embodiment.
FIG. 2 is a block diagram schematically illustrating a configuration of the image pickup apparatus in FIG. 1.
FIG. 3 is a flowchart illustrating the steps of a data transmission process executed in the image pickup apparatus in FIG. 1.
FIG. 4 is a block diagram schematically illustrating a configuration of the management system in FIG. 1.
FIG. 5 is a diagram illustrating an example of a configuration of an image database of FIG. 4.
FIG. 6 is a flowchart illustrating the steps of a blockchain registration process executed in the management system in FIG. 1.
FIG. 7 is a diagram illustrating an example of a block data structure of a blockchain managed by a blockchain management unit in FIG. 4.
FIG. 8 is a flowchart illustrating the steps of an authenticity determination process executed in the management system in FIG. 1.

### Description of Embodiments

Hereinafter, embodiments of the present invention will be described. It should be noted that the embodiments of the present invention are not limited to the following descriptions.

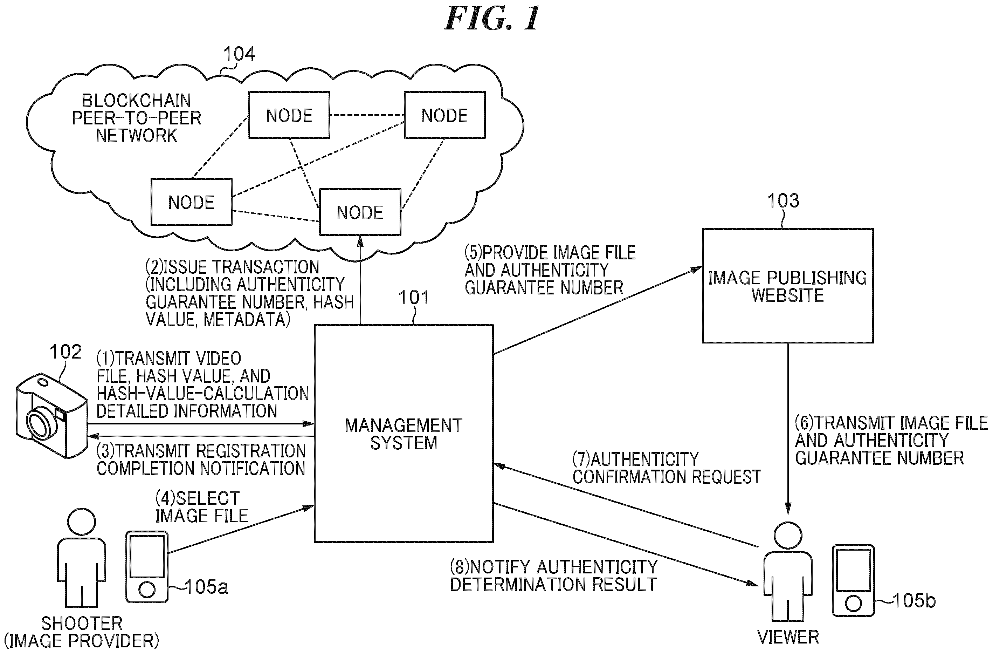

FIG. 1 is a diagram for explaining a function of a management system 101 as a content management apparatus that communicates with an image pickup apparatus 102 as a content generation apparatus according to the present embodiment.

The management system 101 has a function of managing content acquired from an external apparatus such as the image pickup apparatus 102 via the Internet or the like. The management system 101 is implemented by one or more computer devices. It should be noted that in the present embodiment, a configuration in which the management system 101 further communicates with and uses a blockchain peer-to-peer network 104 will be described, but the present invention is not limited to this configuration, and may be implemented using another network.

As illustrated in FIG. 1, upon shooting a video, the image pickup apparatus 102 generates a video file including video data, audio data, and metadata which will be described later. Subsequently, the image pickup apparatus 102 generates an audio file including the audio data and the metadata in the video file. Subsequently, the image pickup apparatus 102 executes a hash function on the generated audio file to generate a hash value of the audio file. Since an audio file does not include video data, a data amount of the audio file is overwhelmingly smaller than that of the video file. Therefore, generating a hash value from an audio file reduces a processing load of generating the hash value as compared with a case of generating a hash value from a video file. **In** particular, it is very desirable to reduce the processing load of generating a hash value in apparatuses having lower calculation performance than personal computers, such as image pickup apparatuses. It should be noted that the metadata includes attribute information of image data indicating a shooter of the image data, shooting time, shooting location, model of the image pickup apparatus, setting values at the time of shooting, and the like, and a data amount of the metadata is smaller than that of the video data.

Further, in the present embodiment, the image pickup apparatus 102 performs trimming processing on the audio data included in the generated video file, and executes a hash function on the trimmed audio data and the metadata. A portion (a portion to be trimmed) removed from the audio data by the trimming processing is, for example, unnecessary information such as silence or noise that continues for a certain period of time. A condition for determining such a portion to be trimmed can be set in advance for the image pickup apparatus 102 by a shooter or the like. By performing the trimming processing on the audio data, the data amount of the audio data can be made smaller than that before performing the trimming processing, and the processing load of generating a hash value can be further reduced.

The image pickup apparatus 102 transmits the video file, the hash value (audio hash value), and hash-value-calculation detailed information to the management system 101 in association with each other (step (1)). The image pickup apparatus 102 may further transmit the audio file in step (1). The audio file does not include video data, but can be widely used as audio content. The authenticity of the audio file can also be guaranteed by registering the hash value in the blockchain similarly to the video file.

The hash-value-calculation detailed information is information describing information indicating data (in the present embodiment, the audio data and the metadata included in the audio file) on which the hash function is executed among data included in the video file. It should be noted that the hash function may not be executed on all items of the metadata, and the hash function may be performed on some items of the metadata. When the hash function is executed on some items of the metadata, the hash-value-calculation detailed information indicates which item of the metadata the hash function is executed on. In addition, when the trimming processing is performed on the audio data, the hash-value-calculation detailed information may describe information indicating a condition for determining the portion to be trimmed.

It should be noted that as to an algorithm of the hash function, only a default algorithm may be used, or one of multiple algorithms, such as SHA 256 and MD5, may be selected. In a case of a configuration capable of selecting one of multiple algorithms, the algorithm used for the hash value calculation is also described in the hash-value-calculation detailed information. When hashing, for example, the audio data, the algorithm SHA 256 processes the data 64-bytes to 64-bytes from the head to the end of the data, thereby generating a hash value of 32 bytes (256 bits). If a process in which first 64 bytes from the head of the audio data are used for the processing and the next 64 bytes are skipped without being used for the processing, is repeatedly performed for the whole audio data, a processing amount will be halved. The hash-value-calculation detailed information in this case can be expressed as, for example, "Algorithm, SHA 256, Read, 64, Skip, 64" in a CSV file format. It should be noted that the format of the hash-value-calculation detailed information is not limited to the CSV file format. For the hash-value-calculation detailed information, a widely used file format, such as the JSON file format, may be used, or a unique file format may be used.

It should be noted that in the present embodiment, a description will be given as to a configuration in which the image pickup apparatus 102 generates a hash value and transmits the hash value to the management system 101, but the present invention is not limited to this configuration. For example, the management system 101 may generate a hash value on the basis of an audio file acquired from the image pickup apparatus 102.

Upon receiving the video file, the hash value, and the hash-value-calculation detailed information from the image pickup apparatus 102, the management system 101 of the present embodiment generates an authenticity guarantee number that is a unique number in the management system 101. The authenticity guarantee number is an identification number for uniquely identifying the video file.

The management system 101 generates transaction data including video file information, such as the metadata, the hash value, and the hash-value-calculation detailed information, and the authenticity guarantee number, and connects a block in which the generated transaction data is written to a blockchain. Specifically, the management system 101 issues the generated transaction data and broadcasts the transaction data to one or more computers (nodes) participating in a blockchain peer-to-peer network 104 (step (2)). By doing this, the transaction data is temporarily stored in a transaction pool, and verification is completed when the transaction data is approved by a miner. Then, a block in which the transaction data is written is generated, and the generated block is added to a tail of the blockchain. As a result, the video file information is registered in the blockchain.

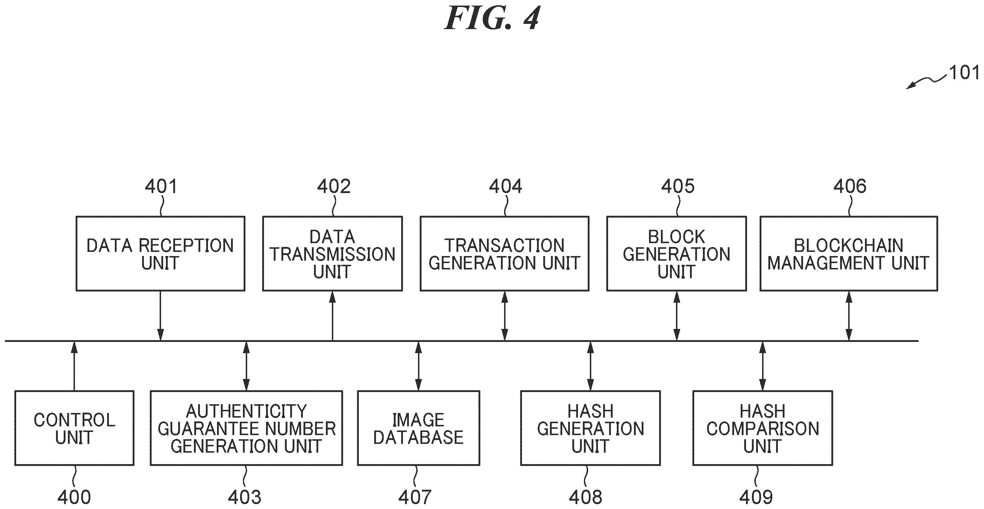

After connecting the block in which the transaction data is written to the blockchain in step (2), the management system 101 stores (provides) the video file and the authenticity guarantee number in association with each other in an image database 407 of FIG. 4 which will be described later. The management system 101 then transmits, to the image pickup apparatus 102, a registration completion notification indicating that the process of registering the video file information in the blockchain is completed (step (3)).

Thereafter, the management system 101 causes a user (for example, a shooter or an image provider) to select a video file to be published on an image publishing website 103 from among a plurality of video files registered in the image database 407 (step (4)). Specifically, the user is allowed to access a web page of the management system 101 from a communication apparatus 105a operated by the user, and select, on the web page, a video file to be published on the image publishing website 103. The management system 101 provides the video file selected by the user and the authenticity guarantee number associated with the selected video file to the image publishing website 103 (step (5)). At the same time, the management system 101 notifies the communication apparatus 105a that the video file selected by the user in step (4) is now ready for publication on the image publishing website 103.

A display of the image publishing website 103 is controlled such that the authenticity guarantee number provided from the management system 101 together with the video file is displayed, for example, near the video file on the web page. It should be noted that a display position of the authenticity guarantee number is not limited thereto, and the authenticity guarantee number may be displayed at any position where a viewer of the image publishing website 103 can recognize that the authenticity guarantee number corresponds to the video file.

A viewer of the image publishing website 103 may want to confirm that a video file displayed on the web page of the image publishing website 103 has not been tampered from the time of shooting. In this case, the viewer first acquires (downloads) the video file and the authenticity guarantee number associated with the video file from the image publishing website 103 using a communication apparatus 105b (step (6)). Specifically, the viewer accesses the web page of the image publishing website 103 from the communication apparatus 105b, selects a video file published on the web page, and instructs downloading. Upon receiving this instruction, the image publishing website 103 transmits the video file selected by the viewer and the authenticity guarantee number associated with the selected video file to the communication apparatus 105b.

When the downloading is completed in step (6), the communication apparatus 105b (a first communication apparatus) transmits an authenticity confirmation request for the video file together with the acquired video file and authenticity guarantee number to the management system 101 (step (7)). In the present embodiment, the authenticity confirmation request is made by a viewer using the communication apparatus 105b, attaching the video file and the authenticity guarantee number acquired from the image publishing website 103 to an input form provided by the management system 101. However, the authenticity confirmation request is not limited to a method of the present embodiment, and for example, the authenticity confirmation request may be made by transmitting an e-mail to which the video file and the authenticity guarantee number are attached to the management system 101.

Upon receiving the authenticity confirmation request from the communication apparatus 105b, the management system 101 determines the authenticity of the video file as a target of the authenticity confirmation request. It should be noted that, here, the timing for determining the authenticity is when the management system 101 receives the authenticity confirmation request for the image data displayed on the image publishing website 103 from the communication apparatus 105b of the viewer of the image publishing website 103, but is not limited thereto. For example, the management system 101 may periodically determine the authenticity on the basis of the image database 407. The management system 101 displays an authenticity determination result on the web page of the management system 101 or notifies the communication apparatus 105b of the authenticity determination result by e-mail (step (8)).

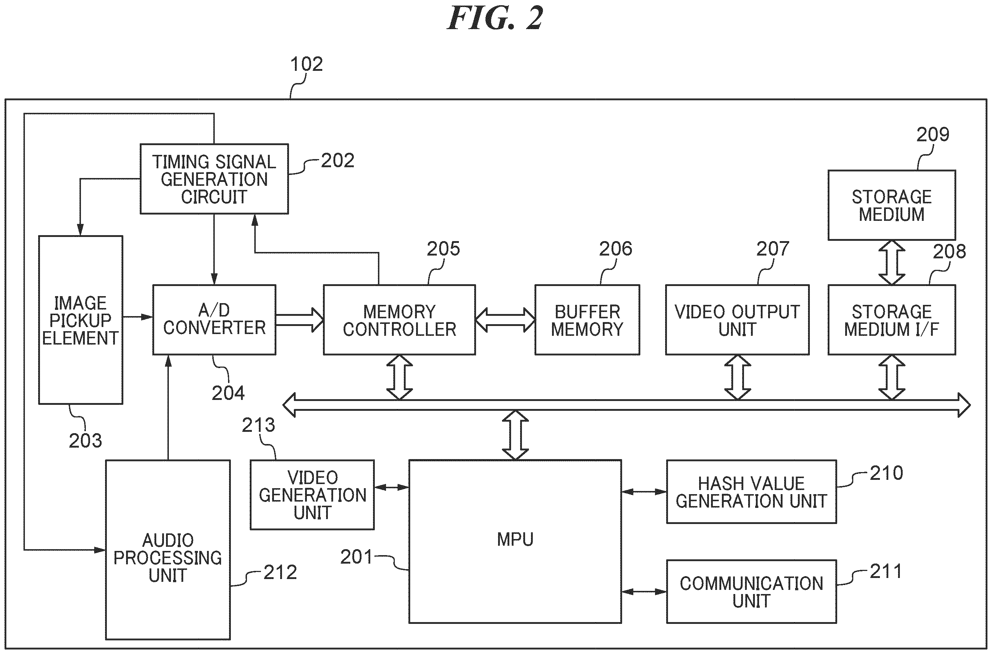

FIG. 2 is a block diagram schematically illustrating a configuration of the image pickup apparatus 102 in FIG. 1. The image pickup apparatus 102 is a camera such as a digital camera or a digital video camera, or an electronic device having a video capturing function such as a mobile phone having a camera function or a camera-equipped computer.

Referring to FIG. 2, the image pickup apparatus 102 includes an MPU 201, a timing signal generation circuit 202, an image pickup element 203, an A/D converter 204, a memory controller 205, a buffer memory 206, a video output unit 207, a storage medium I/F 208, a storage medium 209, a hash value generation unit 210, a communication unit 211, an audio processing unit 212, and a video generation unit 213.

The MPU 201 is a microcontroller for performing control related to a system of the image pickup apparatus 102 such as a shooting sequence. The timing signal generation circuit 202 generates a timing signal necessary for operating the image pickup element 203 and the audio processing unit 212. The image pickup element 203 is an image sensor such as a CCD or a CMOS that receives light reflected from a subject and converts the reflected light into an electric signal. The A/D converter 204 converts analog video data read from the image pickup element 203 into digital video data.

The memory controller 205 controls reading and writing from and to memory, refreshing of the buffer memory 206, and the like. The buffer memory 206 stores video files or the like generated by the video generation unit 213. The video output unit 207 displays video data included in a video file stored in the buffer memory 206 through a monitor (which is not shown) or the like of the image pickup apparatus 102, and outputs audio data through a speaker (which is not shown) or the like of the image pickup apparatus 102. The storage medium I/F 208 is an interface for controlling reading and writing of data from and to the storage medium 209. The storage medium 209 is a memory card, a hard disk, or the like, and stores programs, audio files, video files, and others.

The hash value generation unit 210 executes a hash function on an audio file including trimmed audio data and the metadata to generate a hash value of the audio file. It should be noted that the hash value generation unit 210 may generate the hash value by executing the hash function on the audio data instead of the audio file. Further, in the present embodiment, the MPU 201 may generate the hash value instead of the hash value generation unit 210. The communication unit 211 is connected to the Internet and transmits and receives data to and from an external apparatus.

The audio processing unit 212 performs audio processing for converting a sound and an environmental sound collected by a sound collection unit (which is not illustrated) of the image pickup apparatus 102 such as a microphone into an electric signal, and generates analog audio data. The generated analog audio data is converted into digital audio data by the A/D converter 204. Further, the audio processing unit 212 can also perform the above-described trimming processing on the digital audio data to generate audio data from which the portion to be trimmed has been removed. The video generation unit 213 generates a video file by synchronizing audio data and video data on the basis of a time code or the like.

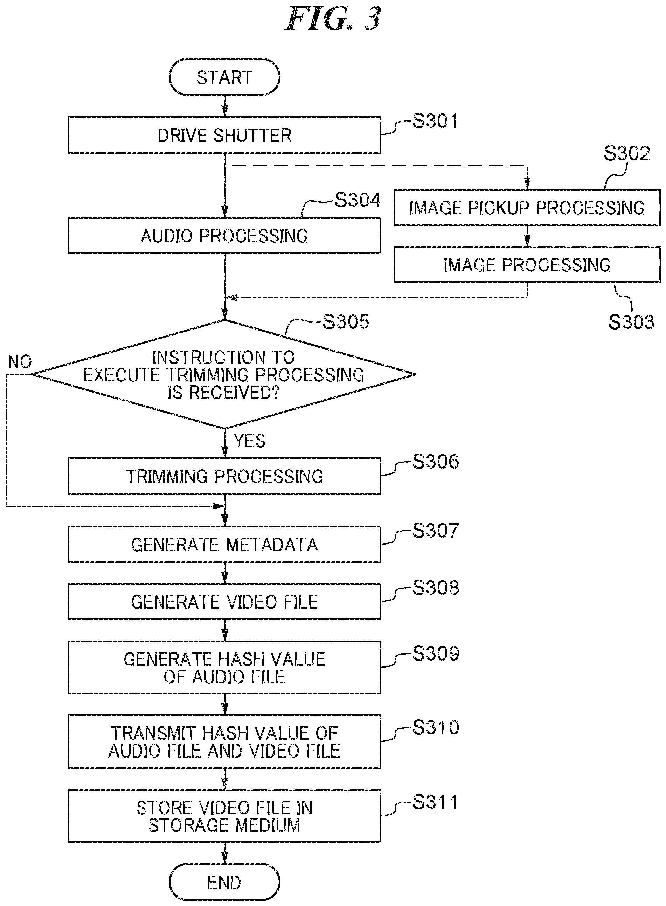

FIG. 3 is a flowchart illustrating the steps of a data transmission process executed in the image pickup apparatus 102 in FIG. 1. The data transmission process of FIG. 3 is implemented by the MPU 201 of the image pickup apparatus 102 executing a program stored in the storage medium 209 or the like. The data transmission process of FIG. 3 is implemented when the image pickup apparatus 102 receives a predetermined video shooting start operation performed by a shooter, such as operation of making audio-file-hash-value output settings and then pressing a video shooting button of the image pickup apparatus 102. The audio-file-hash-value output settings are settings for generating a hash value of an audio file including audio data and metadata included in the video file.

In FIG. 3, the MPU 201 drives a shutter (which is not shown) to control an exposure time (step S301). Subsequently, the MPU 201 performs image pickup processing in which the image pickup element 203 receives light reflected from a subject and converts the reflected light into an electric signal (step S302). Subsequently, the MPU 201 performs image processing such as development and encoding on data obtained by the image pickup processing of step S302 (step S303). In this way, video data is generated. Thereafter, the processing proceeds to step S305.

Further, in parallel with step S302, the MPU 201 controls the audio processing unit 212 to perform audio processing for converting the audio and the environmental sound collected by the sound collection unit (such as a microphone) of the image pickup apparatus 102 into an electric signal (step S304). Analog audio data generated by the audio processing is converted into digital audio data by the A/D converter 204. Subsequently, the MPU 201 determines whether an instruction to execute the trimming processing is received from the memory controller 205 or the like (step S305). If the MPU 201 determines in step S305 that the instruction to execute the trimming processing is not received from the memory controller 205 or the like, the processing proceeds to step S307 which will be described later. If the MPU 201 determines in step S305 that the instruction to execute the trimming processing is received from the memory controller 205 or the like, the processing proceeds to step S306 which will be described later. It should be noted that in the present embodiment, a shooter or the like is allowed to set in advance for the image pickup apparatus 102 whether to perform the trimming processing, and the MPU 201 may control whether to perform the trimming processing on the basis of this setting.

In step S306, the MPU 201 controls the audio processing unit 212 to perform the trimming processing. In the trimming processing, the MPU 201 determines whether the digital audio data obtained by the conversion by the A/D converter 204 includes a portion to be trimmed (for example, unnecessary information such as silence or noise that continues for a certain period of time). When it is determined that the portion to be trimmed is included in the digital audio data, the audio processing unit 212 removes the portion to be trimmed from the digital audio data to generate "trimmed audio data". Further, when the trimmed audio data is generated, the audio processing unit 212 removes data of the same time code as the portion to be trimmed of the audio data in the video data to generate the trimmed video data.

Subsequently, the MPU 201 generates metadata (step S307). The metadata includes attribute information of the content. The attribute information of the content is, for example, information indicating a shooter, shooting time, shooting location, model of the image pickup apparatus, setting values at the time of shooting, time code of the portion to be trimmed, and the like. It should be noted that the information included in the metadata is not limited to the above-described information, and arbitrary information that can be set by a shooter may be further included in the metadata. For example, when a shooter is shooting a music live show or the like, information on an artist name or information on music may be included in the metadata. Further, when a shooter performs audio distribution or the like, the name and SNS account of the shooter or the like may be included in the metadata. It should be noted that the processing of step S307 is also performed if the MPU 201 determines in step S305 that the instruction to execute the trimming processing is not received from the memory controller 205 or the like.

Subsequently, the MPU 201 controls the video generation unit 213 to generate a video file (step S308). Specifically, the MPU 201 controls the video generation unit 213 to generate the video data by synchronizing the audio data and the video data with the time code or the like, and generate a video file of MPEG format or the like including the generated video data and the metadata. Further, the MPU 201 generates an audio file of MP3 format or the like including the trimmed audio data and the metadata.

Subsequently, the MPU 201 executes the hash function on the generated audio file to generate a hash value of the audio file (step S309). Subsequently, the MPU 201 transmits the hash value of the audio file generated in step S309 and the video file generated in step S308 to the management system 101 (step S310). It should be noted that the data transmitted in step S310 may have been subjected to encryption processing. Subsequently, the MPU 201 stores the video file generated in step S308 in the storage medium 209 (step S311), and ends the present processing.

As described above, in the present embodiment, when the audio-file-hash value output settings is made and the image pickup apparatus 102 shoots the video, not only a video file is recorded in the storage medium 209, but also a hash value of an audio file and the video file are transmitted to the management system 101.

FIG. 4 is a block diagram schematically illustrating a configuration of the management system 101 in FIG. 1. The management system 101 includes one or more computers connected to a network.

Referring to FIG. 4, the management system 101 includes a control unit 400, a data reception unit 401, a data transmission unit 402, an authenticity guarantee number generation unit 403, and a transaction generation unit 404. The management system 101 further includes a block generation unit 405, a blockchain management unit 406, an image database 407, a hash generation unit 408, and a hash comparison unit 409.

The control unit 400 controls the entire management system 101.

The data reception unit 401 receives various data from an external apparatus. For example, the data reception unit 401 receives a hash value of an audio file, hash-value-calculation detailed information, and a video file from the image pickup apparatus 102. Further, the data reception unit 401 receives a video file that is a target of the authenticity determination and an authenticity guarantee number from the communication apparatus 105b operated by a viewer of the image publishing website 103.

The data transmission unit 402 transmits various data to an external apparatus. For example, the data transmission unit 402 transmits a video file selected to be published on the image publishing website 103 and the authenticity guarantee number corresponding thereto to the communication apparatus 105a operated by a user (for example, a shooter or an image provider). Further, the data transmission unit 402 transmits an authenticity determination result to the communication apparatus 105b operated by a viewer who has made an authenticity confirmation request for the video file.

Upon receiving a hash value and a video file from the image pickup apparatus 102, the authenticity guarantee number generation unit 403 generates an authenticity guarantee number that is the unique number in the management system 101.

The transaction generation unit 404 generates transaction data and broadcasts the generated transaction data to one or more computers (nodes) participating in the blockchain peer-to-peer network 104. The transaction data includes the hash value received from the image pickup apparatus 102, the authenticity guarantee number generated and associated with the video file when the hash value is received, and the metadata included in the video file. It should be noted that the transaction data may also include audio file.

When the broadcasted transaction data is approved by a miner and verification thereof is completed, the block generation unit 405 generates a block in which the transaction data is written and connects the block to the blockchain.

The blockchain management unit 406 manages a blockchain also held by one or more computers (nodes) participating in the blockchain peer-to-peer network 104. The management system 101 and the nodes are synchronized with each other such that blockchains held by them always have the same content.

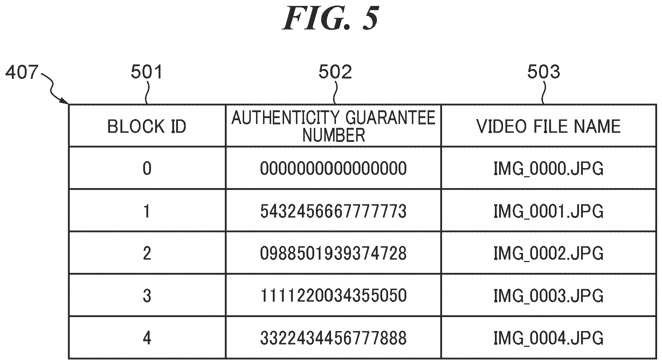

In the image database 407, a video file and an authenticity guarantee number corresponding to the video file are registered. Specifically, as illustrated in FIG. 5, the image database 407 includes a block ID 501, an authenticity guarantee number 502, and a video file name 503 in association with each other.

In the block ID 501, a block ID (an ID number) sequentially issued every time a block in which a video file is written is connected to the blockchain is set. That is, each block ID set in the block ID 501 corresponds to one of hash values registered in the blockchain.

The authenticity guarantee number corresponding to the video file is set to the authenticity guarantee number 502.

A file name of the video file received by the management system 101 from the image pickup apparatus 102 or the like is set in the video file name 503.

It should be noted that a configuration of the image database 407 is not limited to the above-described configuration, and the image database 407 may include other items.

Referring to FIG. 4 again, when determining the authenticity, the hash generation unit 408 acquires the audio data and the metadata from the video file transmitted from the communication apparatus 105b of a user (viewer) who has made the authenticity confirmation request, generates the audio file, and generates a hash value by executing the hash function on the generated audio file.

The hash comparison unit 409 acquires a block (which will be described later) corresponding to the authenticity guarantee number transmitted from the user who has made the authenticity confirmation request from the blockchain managed by the blockchain management unit 406. Then, the hash comparison unit 409 acquires the hash value (audio hash value) written in the acquired block. The hash comparison unit 409 compares the hash value acquired from the block with the hash value generated by the hash generation unit 408 to determine the authenticity. When the hash value acquired from the block is the same as the hash value generated by the hash generation unit 408, the hash comparison unit 409 determines that the video file transmitted from the user who has made the authenticity confirmation request is not tampered (is true) from a time of generation. On the other hand, when the hash value acquired from the block and the hash value generated by the hash generation unit 408 are different from each other, the hash comparison unit 409 determines that the video file transmitted from the user who has made the authenticity confirmation request is tampered (is not true and is false) from the time of generation.

For example, when the video file distributed from the image publishing website 103 to the communication apparatus 105b has been tampered, the tampered video file is transmitted to the management system 101 together with the authenticity confirmation request. When the video file has been tampered since the time of generation, the hash value generated by the hash generation unit 408 executing the hash function on the audio file generated from the video file is different from the hash value calculated for the audio file generated from the video file before tampering. In addition, the hash value stored in the blockchain by the management system 101 cannot be changed by anyone. Therefore, when the authenticity confirmation request is made for the tampered video file, the hash value generated by the hash generation unit 408 for the audio file generated from the video file does not match the hash value stored in the block corresponding to the authenticity guarantee number of the authenticity confirmation request in the blockchain.

On the other hand, when the video file is not edited or tampered, the audio file generated from the video file by the hash generation unit 408 is not changed. Therefore, when the video file has not been edited or tampered from the time of generation, the hash value generated by the hash generation unit 408 for the audio file generated from the video file matches the hash value stored in the block corresponding to the authenticity guarantee number of the authenticity confirmation request in the blockchain.

As described above, in the present embodiment, the video file and the hash value of the audio file transmitted from the image pickup apparatus 102 are managed in association with each other by the management system 101. Thus, the audio file corresponding to the hash value and the video file can be easily provided. It should be noted that the image database 407 may also include a file name of the audio file corresponding to the video file as an item.

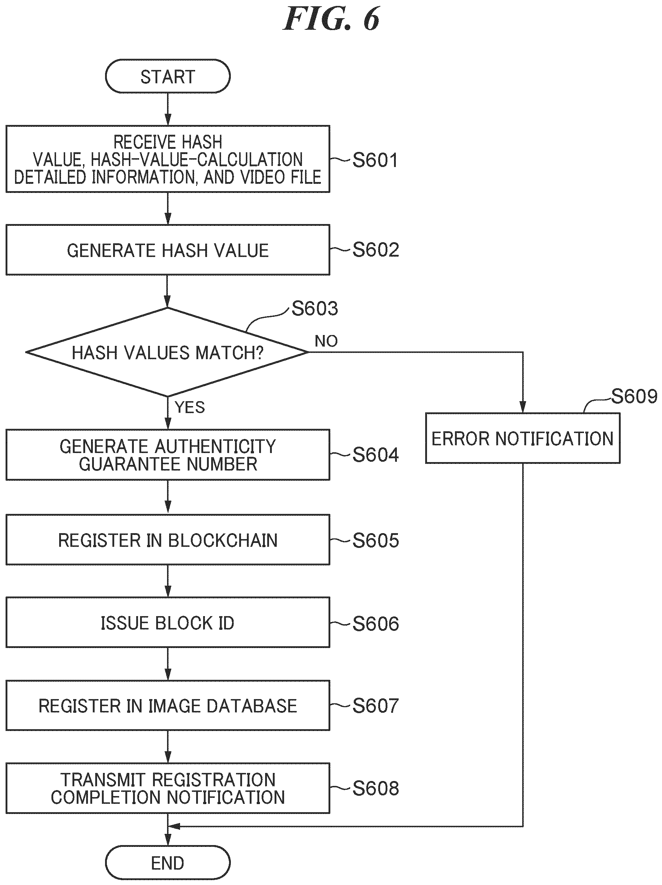

FIG. 6 is a flowchart illustrating the steps of a blockchain registration process executed in the management system 101 in FIG. 1. The blockchain registration process of FIG. 6 is implemented by the control unit 400 executing a program stored in a storage medium included in a computer constituting the management system 101. The blockchain registration process of FIG. 6 is executed, for example, when the data transmission process of FIG. 3 is performed by the image pickup apparatus 102 and the hash value and the video file are transmitted from the image pickup apparatus 102.

**In** FIG. 6, the control unit 400 receives a hash value of audio file, hash-value-calculation detailed information, and a video file from the image pickup apparatus 102 (step S601). When the received data has been subjected to encryption processing, the control unit 400 performs decryption processing on the received data. Thereafter, the control unit 400 stores video file information such as the hash value, the hash-value-calculation detailed information, the audio data included in the received video file, and the metadata in a RAM (which is not illustrated).

Subsequently, the control unit 400 generates an audio file from audio data and metadata extracted from the received video file. Subsequently, the control unit 400 applies the hash function to the audio file (executes the hash function on the audio file) to calculate (generate) a hash value (step S602). Subsequently, the control unit 400 determines whether the hash value of the audio file received in step S601 matches the hash value calculated in step S602 (step S603).

As a result of the determination in step S603, if the hash value of the received audio file matches the calculated hash value, the processing proceeds to step S604 which will be described later. As a result of the determination in step S603, if the hash value of the received audio file does not match the calculated hash value, the processing proceeds to step S609. In step S609, the control unit 400 issues an error notification indicating that information and data received from the image pickup apparatus 102 in step S601 cannot be registered in the blockchain. Thereafter, the present processing ends.

In step S604, the control unit 400 controls the authenticity guarantee number generation unit 403 to generate the authenticity guarantee number of the received video file.

Subsequently, the control unit 400 registers in the blockchain the video file information such as the hash value, the hash-value-calculation detailed information, and the metadata stored in the RAM in step S601 (step S605). Specifically, first, the control unit 400 causes the transaction generation unit 404 to generate transaction data including the hash value, the hash-value-calculation detailed information, and the metadata. Subsequently, the control unit 400 causes the transaction generation unit 404 to broadcast the transaction data to one or more computers (nodes) participating in the blockchain peer-to-peer network 104. When the broadcasted transaction data is approved by a miner and the verification thereof is completed, the block generation unit 405 generates a block in which the verified transaction data is written and connects (registers) the generated block to the blockchain.

Subsequently, the control unit 400 issues a block ID corresponding to the generated block (step S606). Here, the control unit 400 issues, as the block ID, a value generated by executing the hash function on a header of the block twice. It should be noted that the block ID is used to refer to the block, but there is no field of the block ID in the block.

Subsequently, the control unit 400 registers, in the image database 407, the issued block ID, the video file received in step S601, and the authenticity guarantee number generated in step S604 in association with each other (Step S607). The control unit 400 may further generate an audio file from the audio data and the metadata included in the video file, and register the audio file in the image database 407 in association with the authenticity guarantee number common to the video file. Subsequently, the control unit 400 transmits to the image pickup apparatus 102 a registration completion notification indicating that a process of registering the video file information in the blockchain is completed (step S608). Thereafter, the blockchain registration process ends.

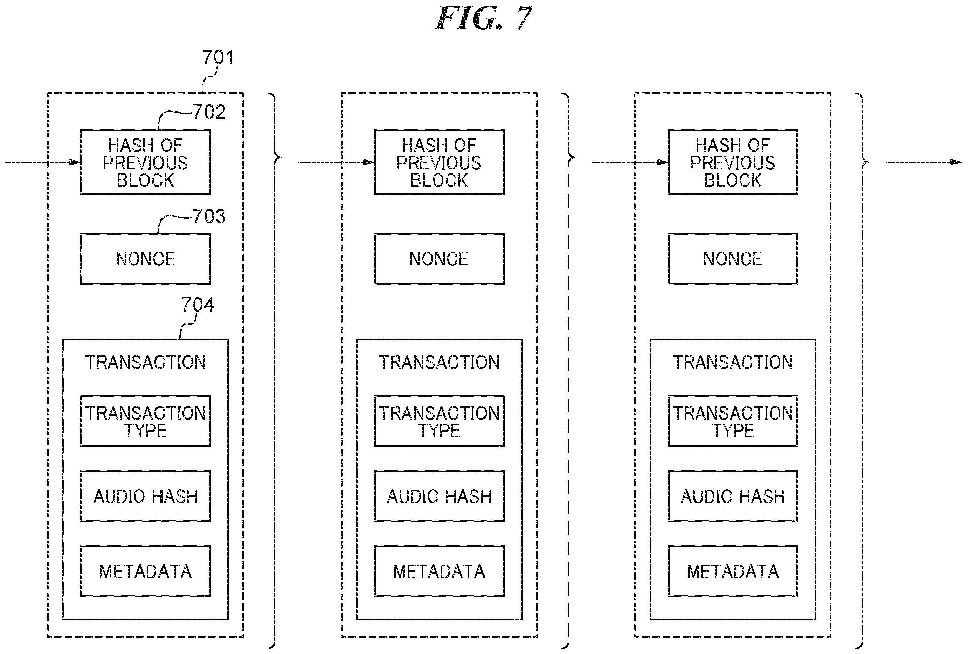

FIG. 7 is a diagram illustrating an example of a block data structure of the blockchain managed by the blockchain management unit 406 in FIG. 4. As illustrated in FIG. 7, the blockchain is a database formed by connecting blocks along a time series like a chain. A block 701 connected to the blockchain includes a hash 702 of the previous block, a nonce 703, and a transaction 704.

The hash 702 of the previous block is a hash value in a block connected to the blockchain one block before the block 701. The nonce 703 is a nonce value used for mining (verification and approval). The transaction 704 is transaction data generated by the transaction generation unit 404. The transaction 704 includes information indicating a type of transaction, a hash value (in FIG. 7, it is described as "audio hash") of the audio file received from the image pickup apparatus 102, and the metadata included in the video file.

According to the above-described embodiment, a hash value of an audio file is generated from the audio file including audio data and metadata included in a video file, and the hash value of the audio file and the video file are transmitted to the management system 101. That is, the hash function is executed not on the video file but on the audio file with a smaller processing load of generating the hash value than the video file. Thus, in a configuration using audio data in video files, it is possible to reduce the processing load of generating the hash value to be registered in a blockchain.

Further, in the above-described embodiment, the image pickup apparatus 102 is an apparatus that shoots a subject to generate a video file. Thus, in the image pickup apparatus 102 that shoots a subject to generate a video file, it is possible to reduce the processing load of generating the hash value to be registered in a blockchain.

It should be noted that in the present embodiment, a configuration in which the image pickup apparatus 102 transmits a hash value of an audio file along with a video file to the management system 101 has been described, but the present invention is not limited to this configuration. For example, the image pickup apparatus 102 may transmit the hash value of the audio file and the audio file to the management system 101. The management system 101 performs the blockchain registration process described above on the basis of the hash value of the audio file and the audio file that were received, and registers the audio file in the image database 407 in association with the hash value of the audio file registered in the blockchain. Thus, the audio file corresponding to the hash value can be easily provided.

Further, in the present embodiment, the image pickup apparatus 102 may transmit the hash value of the audio file along with the video file and the audio file to the management system 101. The management system 101 performs the blockchain registration process described above on the basis of the hash value of the audio file, the video file, and the audio file that were received. Through the blockchain registration process, the video file and the audio file are registered in the image database 407 in association with the hash value of the audio file registered in the blockchain. Thus, it is possible to easily provide the audio file corresponding to the hash value and the video file obtained by adding the video data to the audio file.

In the present embodiment, a configuration in which the image pickup apparatus 102 generates a hash value of a audio file and transmits the hash value to the management system 101 has been described, but the present invention is not limited to this configuration. For example, the management system 101 may acquire an audio file from the image pickup apparatus 102 and execute the hash function on the acquired audio file to generate a hash value of the audio file. Alternatively, the management system 101 may acquire a video file from the image pickup apparatus 102, and executes the hash function on an audio file including the audio data and the metadata included in the acquired video file to generate a hash value of the audio file. With this configuration as well, the same effects as those of the above-described embodiment can be obtained.

Further, in a configuration of the present embodiment, the image pickup apparatus 102 performs the trimming processing on the audio data, however, the present invention is not limited to this configuration, and management system 101 may perform the trimming processing on the audio data.

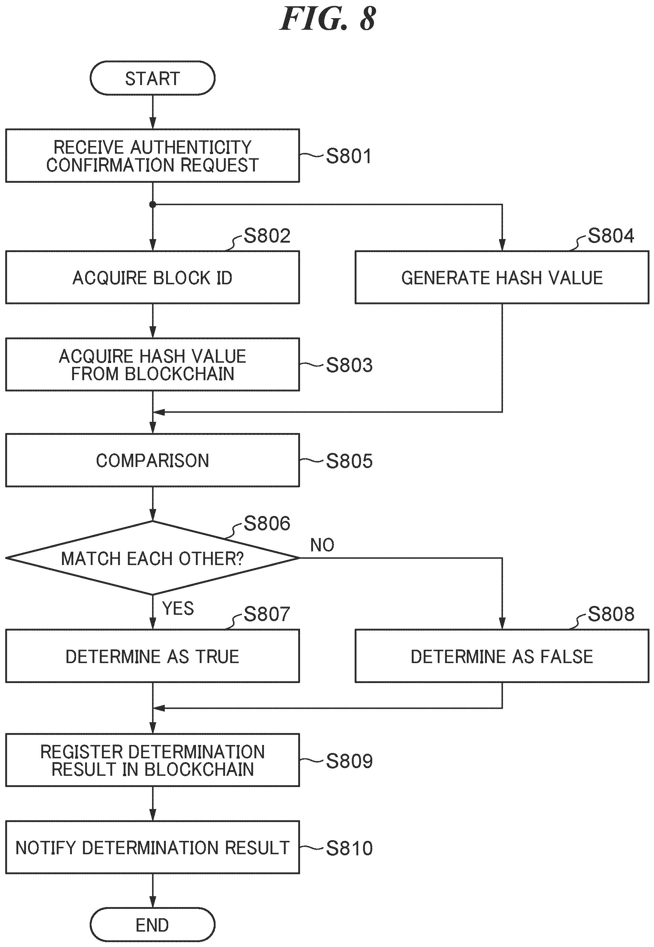

FIG. 8 is a flowchart illustrating the steps of an authenticity determination process executed in the management system 101 in FIG. 1. The authenticity determination process of FIG. 8 is implemented by the control unit 400 executing the program stored in a storage medium included in the computer constituting the management system 101. It should be noted that in description using FIG. 8, the authenticity determination process is executed, when a viewer of the image publishing website 103 operates the communication apparatus 105b and thus the communication apparatus 105b makes the authenticity confirmation request for a video file displayed on the image publishing website 103 to the management system 101. However, start of the authenticity determination process is not limited thereto.

In FIG. 8, the control unit 400 receives, by the data reception unit 401, an authenticity confirmation request from the communication apparatus 105b operated by the viewer (step S801). At the time of this reception, the control unit 400 also receives, by the data reception unit 401, a video file that is a target of the authenticity determination and an authenticity guarantee number corresponding to the video file.

Subsequently, the control unit 400 makes an inquiry to the image database 407 using the authenticity guarantee number received in step S801 as a key, and acquires a block ID corresponding to the authenticity guarantee number (step S802).

Subsequently, the control unit 400 accesses a block corresponding to the acquired block ID in the blockchain, and acquires the hash value (audio hash) stored in the block (step S803).

Further, in parallel with the processing of steps S802 and S803, the control unit 400 causes the hash generation unit 408 to execute the hash function on the audio file including the audio data and the metadata included in the video file received in step S801 (step S804). Thus, the control unit 400 causes the hash generation unit 408 to generate (acquire) a hash value. Specifically, the control unit 400 accesses the block corresponding to the acquired block ID among a plurality of blocks constituting the blockchain, and acquires the hash-value-calculation detailed information stored in the block. In step S804, a hash value is generated with reference to the hash-value-calculation detailed information.

When the processing of steps S802 to S804 are completed, the control unit 400 causes the hash comparison unit 409 to compare the audio hash acquired in step S803 with the hash value generated in step S804 (step S805).

The control unit 400 determines whether the two hash values compared in step S805 match (step S806).

As a result of the determination in step S806, if the two hash values match, the control unit 400 determines that the video file received in step S801 is "true" indicating that the video file has not been tampered from the time of generation (step S807). Thereafter, the processing proceeds to step S809.

On the other hand, as a result of the determination in step S806, if the two hash values do not match, the control unit 400 determines that the video file received in step S801 is "false" indicating that the video file has been tampered from the time of generation (step S808). Thereafter, the processing proceeds to step S809.

Subsequently, the control unit 400 controls the block generation unit 405 to register the determination result of step S807 or step S808 in the blockchain (step S809). Specifically, the block generation unit 405 generates a block in which the determination result of step S807 or S808 is written, and connects the generated block to the blockchain.

Subsequently, the control unit 400 controls the data transmission unit 402 to notify the communication apparatus 105b that is a request source of the authenticity confirmation request of the determination result (step S810), and ends the present processing.

The present invention can also be implemented by processing in which a program for implementing one or more functions of the above-described embodiments is supplied to a system or an apparatus via a network or a storage medium, and one or more processors in a computer of the system or the apparatus read and execute the program. Furthermore, the present invention can also be implemented by a circuit (for example, ASIC) that implements one or more functions.

### Reference Signs List

- 101: Management system
- 102: Image pickup apparatus
- 201: MPU
- 210: Hash value generation unit
- 211: Communication unit
- 212: Audio processing unit
- 213: Video generation unit
- 400: Control unit
- 401: Data reception unit
- 404: Transaction generation unit
- 405: Block generation unit
- 406: Blockchain management unit
- 407: Image database

## Claims

1. A content generation apparatus comprising:
means for generating a video file including video data, audio data, and metadata;
means for generating a hash value from the audio data and the metadata; and
transmission means for transmitting the hash value and the video file to a content management apparatus that registers the hash value and the metadata in a block of a blockchain.

2. The content generation apparatus according to claim 1, wherein
the video file is managed in association with a block ID of the block and an authenticity guarantee number, and
the video file is provided together with the authenticity guarantee number.

3. The content generation apparatus according to claim 1, wherein
the transmission means further transmits an audio file including the audio data and the metadata to the content management apparatus, and
the audio file is managed by the content management apparatus in association with an authenticity guarantee number common to the video file.

4. The content generation apparatus according to claim 1, further comprising means for performing trimming processing of removing silence or noise that continues for a certain period of time from the audio data, wherein
a hash value is generated from the audio data subjected to the trimming processing and the metadata.

5. The content generation apparatus according to claim 1, wherein the content generation apparatus is an image pickup apparatus that shoots a subject to generate a video file.

6. A content management apparatus comprising:
means for acquiring a video file including video data, audio data, and metadata, and a hash value;
means for generating a hash value from the audio data and the metadata;
means for performing processing of, in a case where the acquired hash value and the generated hash value match, registering in a block of a blockchain an identifier that uniquely identifies the video file, and the hash value; and
means for distributing to another apparatus an audio file including the audio data, in association with the identifier.

7. The content management apparatus according to claim 6, further comprising means for managing the video file in association with a block ID of the block and an authenticity guarantee number.

8. The content management apparatus according to claim 7, wherein the identifier is an authenticity guarantee number.

9. The content management apparatus according to claim 6, further comprising means for performing trimming processing of removing silence or noise that continues for a certain period of time from the audio data, wherein
a hash value is generated from the audio data subjected to the trimming processing and the metadata.

10. The content management apparatus according to claim 6, wherein the video file and the hash value are acquired from an image pickup apparatus.

11. A control method for a content generation apparatus, the control method comprising:
a step of generating a video file including video data, audio data, and metadata;
a step of generating a hash value from the audio data and the metadata; and
a step of transmitting the hash value and the video file to a content management apparatus that registers the hash value and the metadata in a block of a blockchain.

12. A control method for a content management apparatus comprising:
a step of acquiring a video file including video data, audio data, and metadata, and a hash value;
a step of generating a hash value from the audio data and the metadata;
a step of performing processing of, in a case where the acquired hash value and the generated hash value match, registering in a block of a blockchain an identifier that uniquely identifies the video file, and the hash value; and
a step of distributing to another apparatus an audio file including the audio data, in association with the identifier.

13. A program for causing a computer to execute a control method for a content generation apparatus, the control method for the content generation apparatus comprising:
a step of generating a video file including video data, audio data, and metadata;
a step of generating a hash value from the audio data and the metadata; and
a step of transmitting the hash value and the video file to a content management apparatus that registers the hash value and the metadata in a block of a blockchain.

14. A program for causing a computer to execute a control method for a content management apparatus, the control method for the content management apparatus comprising:
a step of acquiring a video file including video data, audio data, and metadata, and a hash value;
a step of generating a hash value from the audio data and the metadata;
a step of performing processing of, in a case where the acquired hash value and the generated hash value match, registering in a block of a blockchain an identifier that uniquely identifies the video file, and the hash value; and
a step of distributing to another apparatus an audio file including the audio data, in association with the identifier.
